# FASCICULE DE BREVET EUROPEEN

(11) **EP 0 452 164 B1**
(45) Date de publication et mention de la délivrance du brevet: **17.05.1995**
(21) Numéro de dépôt: 91400568.1
(22) Date de dépôt: 01.03.1991
(51) Int. Cl.: C01B 15/12

(54) **Perborate de sodium**
Natriumperborat
Sodium perborate

(30) Priorité: 13.03.1990 FR 9003444
(43) Date de publication de la demande: 16.10.1991
(73) Titulaire: ELF ATOCHEM S.A., 92800 Puteaux (FR)
(72) Inventeur: Dugua, Jacques, F-69390 Charly (FR)
(74) Mandataire: Rochet, Michel

(56) Documents cités:
- DE-A- 2 906 190
- FR-A- 2 173 964
- GB-A- 911 664
- US-A- 3 726 959
- US-A- 4 211 759

## Description

La présente invention concerne un nouveau perborate de sodium tétrahydraté, de formule globale NaBO₃, 4H₂O ou encore NaBO₂, H₂O₂, 3H₂O, de configuration particulière, un procédé pour le fabriquer, son application pour fabriquer un perborate de sodium monohydraté de formule globale NaBO₃, H₂O dont les propriétés sont particulièrement intéressantes, et ledit perborate monohydraté.

Il est connu de fabriquer le perborate de sodium tétrahydraté selon des procédés basés sur la génération et l'agglomération de particules dudit perborate à partir d'une solution aqueuse sursaturée de perborate de sodium.

Dans de tels procédés, l'obtention de perborate de sodium tétrahydraté de qualité satisfaisante, présentant en particulier une bonne résistance mécanique et un taux de fines suffisamment faible, n'est permise selon l'art de la technique qu'à la condition d'empêcher la formation de particules trop petites de sorte que les agglomérats ne puissent se former qu'à partir de particules de dimensions suffisamment grandes.

Ce précepte, énoncé par exemple dans le brevet français n°1187352 n'a pas été remis en cause avec le temps, qu'il ait été proposé depuis de fabriquer non des agglomérats compacts mais des agglomérats creux tels que ceux décrits par exemple dans le brevet français n°1436629, ou de faire intervenir des adjuvants comme des agents tensio-actifs anioniques tels que ceux décrits par exemple dans les brevets français n°2121428, 2228718, 2455564.

C'est ainsi que le perborate de sodium tétrahydraté connu à ce jour est sous forme de particules unitaires agglomérées qui ont une dimension supérieure à environ 40-50»m, le plus souvent d'ailleurs bien supérieure à 50»m.

Il a maintenant été trouvé un perborate de sodium tétrahydraté de très haute qualité constitué de particules unitaires agglomérées de très petite taille et qui conduit par déshydratation à un perborate de sodium monohydraté lui-même de très haute qualité.

Le perborate de sodium tétrahydraté de la présente invention, constitué d'agglomérats distincts, compacts et quasi-sphériques de particules unitaires de perborate de sodium tétrahydraté, est caractérisé en ce que lesdites particules sont de dimension maximale n'excédant pas environ 30»m.

Le perborate de la présente invention se distingue des perborates connus, non seulement par la taille des particules unitaires constitutives des agglomérats, mais encore par la configuration même de ces agglomérats dont l'aspect n'est plus en "en chou-fleur", ou encore "efflorescent" et de caractère désordonné plus ou moins accentué, ou encore "en cocon", mais est au contraire plus régulier, plus lisse et d'une bien plus parfaite sphéricité.

La figure 1 est la reproduction d'un cliché à la binoculaire, au grossissement 11,6, d'agglomérats de perborate de sodium tétrahydraté conforme à la présente invention.

La figure 2 est la reproduction d'un cliché de microscopie électronique au grossissement 100, d'agglomérats de perborate de sodium tétrahydraté conforme à la présente invention.

La figure 3 est la reproduction d'un cliché de microscopie électronique au grossissement 250, d'un agglomérat de perborate de sodium tétrahydraté conforme à la présente invention.

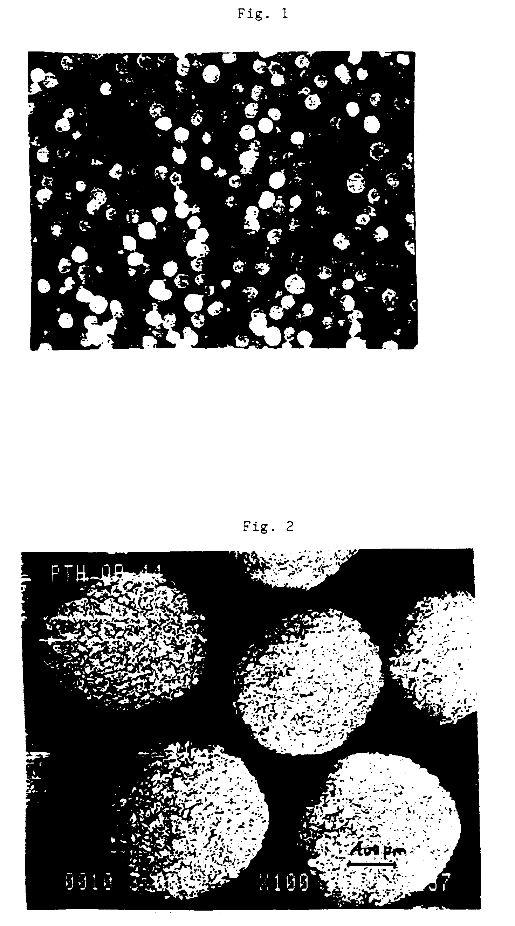

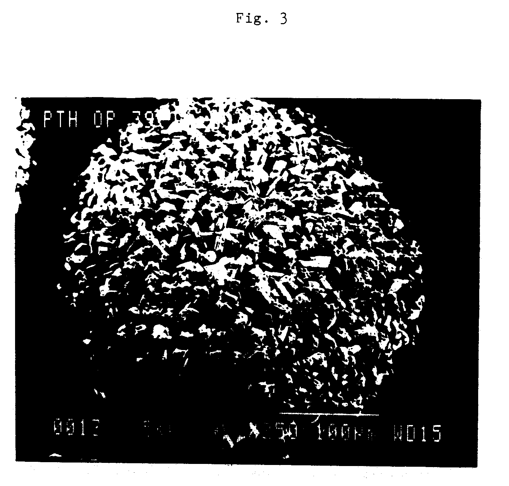

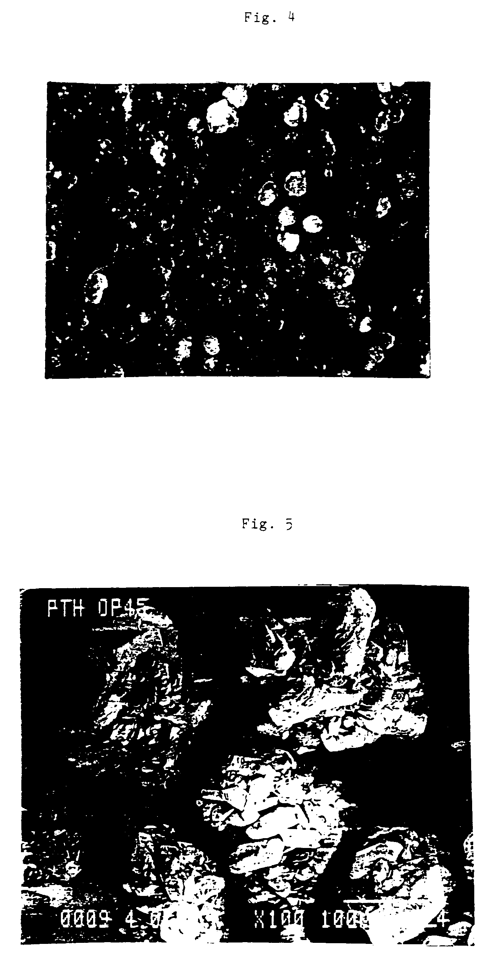

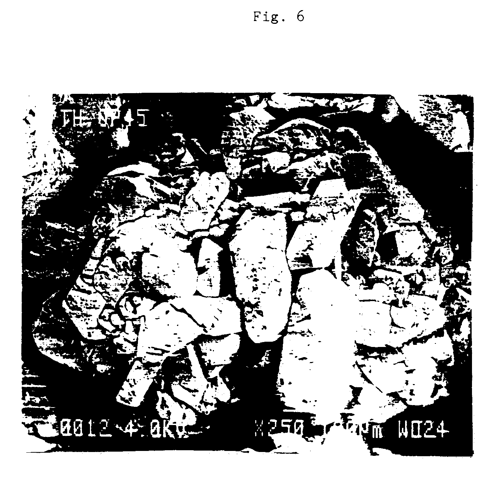

Les figures 1, 2 et 3 permettent la comparaison entre le perborate de l'invention et les perborates connus tels que présentés par exemple dans les brevets français 2121428 et 2455564 déjà cités, ou dans les figures 4, 5 et 6, qui sont respectivement la reproduction d'un cliché à la binoculaire, au grossissement 11,6, et de clichés de microscopie électronique, au grossissement 100 pour la figure 5, au grossissement 250 pour la figure 6, d'un perborate de sodium tétrahydraté préparé en omettant dans le procédé de fabrication du perborate de sodium tétrahydraté de l'invention, deuxième objet de ladite invention, la caractéristique dudit procédé.

Le perborate de sodium tétrahydraté conforme à l'invention est formé d'agglomérats dont la granulométrie moyenne varie avec les conditions choisies pour les fabriquer.

Ces dernières, décrites plus loin, permettent d'obtenir des agglomérats dont la granulométrie moyenne peut être comprise entre des limites aussi éloignées qu'environ 150»m et environ 800»m et qui peuvent ainsi répondre à des exigences applicatives très diverses.

La répartition granulométrique n'en demeure pas moins particulièrement ressérée. Par exemple, dans le cas d'agglomérats de granulométrie moyenne égale à environ 300»m, généralement au moins 90 % des agglomérats, qui sont quasi-sphériques, sont de dimension comprise entre 50»m et 400»m ; 85 % et jusqu'à 90 % sont de dimension comprise entre 200»m et 400»m, tandis qu'environ 95 % d'entre eux sont de dimension supérieure à 150 m.

Le taux pondéral de fines de dimension inférieure à 50»m présentes avec les agglomérats tels qu'ils résultent du procédé qui convient à leur fabrication, est inférieur à environ 2 %, le plus souvent même inférieur à 0,5 %.

Le perborate de sodium tétrahydraté, sous forme d'agglomérats selon l'invention, a une densité apparente supérieure à 500 g/l et le plus généralement comprise entre environ 700 g/l et environ 850 g/l.

La solidité desdits agglomérats, traduite par leur résistance à l'usure mécanique mesurée selon un test décrit plus loin et appliqué à l'identique à des perborates connus pour comparaison, s'avère être au moins aussi élevée que celle de ces perborates connus.

Un constat identique est fait en ce qui concerne la vitesse de dissolution.

Un deuxième objet de la présente invention est un procédé de fabrication de perborate de sodium tétrahydraté sous forme d'agglomérats de particules unitaires de dimension maximale n'excédant pas environ 30»m.

Ce procédé, dans lequel :
. les agglomérats de perborate de sodium tétrahydraté se constituent à partir de particules dudit perborate issues d'une solution aqueuse sursaturée de perborate de sodium dont l'état de sursaturation est assuré par l'apport en elle de perborate de sodium en solution aqueuse formé à partir de peroxyde d'hydrogène et de métaborate de sodium, et qui va se désursaturant tandis qu'elle se déplace selon un mouvement ascendant continu à une vitesse ascensionnelle telle que soit assuré un classement granulométrique des particules et agglomérats de la suspension solide-liquide qui se trouve ainsi formée,
. les agglomérats fabriqués sont retirés de ladite suspension solide-liquide en début de déplacement ascendant du liquide,
. le liquide, à l'état désursaturé, est retiré de ladite suspension au terme dudit déplacement ascendant,
est caractérisé en ce que, à la fois :
. l'état de sursaturation de la solution aqueuse sursaturée de perborate de sodium est assuré en présence d'un agent tensio-actif anionique,
. la formation du perborate de sodium nécessaire pour assurer ledit état de sursaturation est réalisée avec un rapport molaire métaborate de sodium/peroxyde d'hydrogène supérieur à 1,
. le liquide désursaturé, retiré de la suspension solide-liquide au terme de son déplacement ascendant, contient, par litre, au moins 30 g. de matière solide à l'état de perborate de sodium tétrahydraté de granulométrie moyenne inférieure à la granulométrie moyenne des agglomérats fabriqués qui sont retirés de ladite suspension,
. ladite matière solide est recyclée dans la suspension solide-liquide pour être présente dans la solution aqueuse sursaturée de perborate de sodium.

La définition qui vient d'être donnée du procédé selon l'invention vaut quand le perborate de sodium apporté pour assurer l'état de sursaturation est formé à partir de peroxyde d'hydrogène et, à la place de métaborate de sodium, de borax, éventuellement en présence d'hydroxyde de sodium.
. L'agent tensio-actif anionique est choisi par exemple parmi ceux déjà utilisés dans des procédés de fabrication de perborate de sodium tétrahydraté.

De tels agents tensio-actifs sont par exemple décrits dans les brevets français n°2121428, 2228718, 2455564. Les deux premiers de ces brevets concernent des agents tensio-actifs anioniques qui contiennent au moins une fonction sulfate ou sulfonate rattachée à une chaîne hydrocarbonée contenant le plus largement de 2 à 22 atomes de carbone ou à un ou plusieurs cycles, des produits dérivés de ces agents de base et des additifs à ces agents ou produits dérivés. Le dernier de ces brevets concerne des polymères carboxyliques.

La quantité d'agent tensio-actif anionique mis en jeu dépend essentiellement de sa nature. Dans le cas d'un agent tensio-actif anionique choisi parmi ceux décrits dans les brevets n°2121428 et 2228718 cités plus haut, elle est par exemple comprise, rapportée à 100 g. d'agglomérats fabriqués considérés à l'état sec, entre environ 0,3 g. et environ 0,6 g., le plus souvent entre environ 0,4 g. et environ 0,5 g. et elle peut être accompagnée, à titre d'illustration, d'une quantité plus faible qu'elle d'environ 3 à 20 fois d'une additif choisi par exemple parmi l'acide oléique sulfaté ou l'oléate d'isobutyle.

Le niveau de la suspension solide-liquide auquel l'agent tensio-actif anionique est ajouté dans la suspension solide-liquide est relativement peu critique pour le résultat de l'invention pourvu que la présence dudit agent soit assurée à la quantité voulue dans la solution aqueuse sursaturée de perborate de sodium.

Le rapport molaire métaborate de sodium/peroxyde d'hydrogène adopté pour former le perborate assurant l'état de sursaturation est généralement choisi compris entre environ 1,05 et environ 1,20, le plus souvent entre environ 1,05 et environ 1,15.

L'apport de perborate de sodium en solution aqueuse assurant l'état de sursaturation de la solution aqueuse sursaturée de perborate de sodium peut être réalisé par formation dudit perborate au sein même de celle-ci ou extérieurement à elle.

La première possibilité est celle qui est normalement préférée pour une raison de simplicité d'exécution : elle consiste à continuellement introduire dans la suspension solide-liquide une solution aqueuse de peroxyde d'hydrogène, par exemple une solution à 35 %, 50 % ou 70 % en poids de peroxyde d'hydrogène, et une solution aqueuse de métaborate de sodium contenant par exemple 300 g./l. à 450 g/l. de métaborate. L'introduction du peroxyde d'hydrogène dans la suspension solide-liquide, réalisée par exemple, comme d'ailleurs celle de la solution aqueuse de métaborate de sodium, par injection, peut avoir lieu à un niveau ou à plusieurs niveaux sur le trajet ascensionnel du liquide à partir de la zone d'introduction du métaborate de sodium.

L'état d'agitation de la suspension solide-liquide, auquel participe la vitesse ascensionnelle du liquide, est modifié s'il en est besoin, et de façon connue, à l'aide par exemple d'un agitateur à pales ou à hélice. Cet état d'agitation doit évidemment être tel que l'état même de suspension et l'effet de classement granulométrique soient assurés, mais aussi que les particules de perborate de sodium tétrahydraté soient maintenues suffisamment longtemps en position de contact ou dans une proximité suffisante nécessaire à leur agglomération, comme le signale par exemple le brevet français n°1187352.

La vitesse ascensionnelle du liquide peut être réglée entre des limites éloignées, par exemple entre environ 8 m./h. et environ 30 m./h., en conduisant à une granulométrie moyenne des agglomérats de l'invention comprise aussi entre des limites éloignées comme il a déjà été dit.

La température de la suspension solide-liquide est choisie et réglée comme elle l'est ordinairement dans les procédés de la même famille que celui de l'invention. Elle est par exemple comprise entre environ 20°C et 25°C.

La quantité de matière solide retirée de la suspension avec le liquide désursaturé au terme de son déplacement ascensionnel est normalement comprise entre 30 g. et environ 150 g., par litre de liquide désursaturé.

Ladite matière solide est séparée aussi efficacement que possible du liquide désursaturé pour être recyclée comme il a été dit. Cette séparation peut être réalisée par exemple par décantation, filtration ou mieux encore par mise en oeuvre d'un hyrocyclone. En pratique il suffit de séparer de la matière solide la quantité de liquide qu'il n'est pas utile de conserver avec elle pour la véhiculer.

Du liquide désursaturé, duquel la matière solide a été séparée comme il vient d'être dit, des eaux-mères résultant de la séparation des agglomérats fabriqués du liquide retiré avec eux, et le cas échéant de l'eau, constituent normalement le flux liquide entrant au bas de l'enceinte dans laquelle se forment les agglomérats selon l'invention.

Cette enceinte peut être tout réacteur connu pour convenir à la fabrication de perborate de sodium tétrahydraté par agglomération de particules issues d'une solution sursaturée de perborate de sodium, comme par exemple un réacteur colonne ou un réacteur de forme cylindroconique respectivement évoqués dans les brevets français n°1187352 et n°2121428.

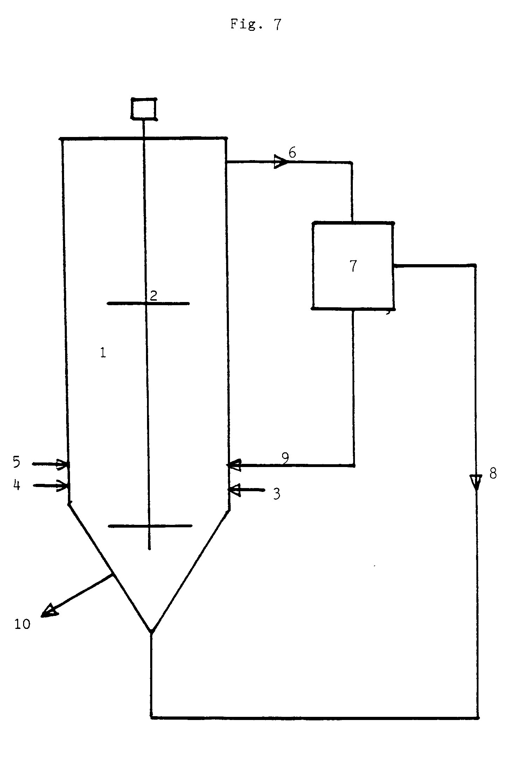

La figure 7 illustre schématiquement un exemple de réalisation du procédé de l'invention.

Sur le schéma de la figure 7, 1 désigne un réacteur cylindroconique et 2 l'agitateur dont ce réacteur est muni ; 3 désigne l'amenée dans le réacteur 1 d'une solution aqueuse de peroxyde d'hydrogène, 4 celle d'une solution aqueuse de métaborate de sodium ; 5 désigne l'amenée d'agent tensio-actif anionique dans le réacteur 1 ; 6 désigne la conduite par laquelle le liquide désursaturé, contenant la matière solide comme précisé plus haut, quitte le réacteur en fin de parcours ascensionnel ; 7 désigne un équipement permettant, la séparation de la matière solide du liquide désursaturé, comme un hydrocyclone ; 8 représente le courant liquide débarassé de matière solide dans la limite de l'efficacité de séparation et introduit au bas du réacteur 1 ; 9 désigne le courant fortement chargé de la matière solide recyclée dans le réacteur 1 dans la solution aqueuse sursaturée de perborate de sodium ; 10 désigne la sortie de liquide contenant les agglomérats de perborate de sodium tétrahydraté selon l'invention, qui sont isolés de façon connue du liquide ou eau-mère les renfermant. Celle-ci est recyclable dans la suspension solide-liquide contenue dans le réacteur 1, comme est recyclé le courant 8. Les parties : isolement des agglomérats, traitement ultérieur de ces agglomérats comme leur essorage et leur séchage, recyclage des eaux-mères, purge de façon à satisfaire le bilan eau, échange calorifique permettant de maintenir la température de la suspension solide-liquide à la température voulue, transfert de matière, en particulier par pompage, ne sont pas portées sur le schéma de la figure 7. Les fonctions auxquelles elles se rapportent sont réalisées de manière conventionnelle.

Le troisième objet de la présente invention est la fabrication de perborate de sodium monohydraté à partir du perborate de sodium tétrahydraté de l'invention.

Le perborate de sodium monohydraté, qui possède par rapport au perborate de sodium tétrahydraté en particulier une teneur en oxygène actif supérieure d'environ 50 % et une vitesse de dissolution plus rapide, lui est de plus en plus préféré dans le domaine des compositions lessivielles.

Le départ d'eau de cristallisation du perborate tétrahydraté est réalisé par deshydratation dudit perborate en lit fluidisé gaz-solide au moyen d'un courant d'air chaud selon des procédés décrits par exemple dans le brevet français n°2013104, le brevet français n°2207859 et le certificat d'addition français à ce brevet n°2285339, le brevet européen n°0194952. Il peut encore être réalisé par application d'une pression réduite comme le décrit par exemple le brevet européen n°0155894.

Le perborate de sodium tétrahydraté de la présente invention convient particulièrement bien comme matière de départ pour de tels procédés.

Par exemple, sa déshydratation en lit fluidisé gaz-solide au moyen d'un courant d'air chaud de température comprise entre 100°C et 180°C lorsqu'il entre dans la zone de fluidisation dans laquelle la température est comprise entre la température de fusion du perborate de sodium tétrahydraté et 80°C et l'humidité relative inférieure à 40 % et de préférence au moins égale à 10 %, conduit à un perborate de sodium monohydraté ayant en même temps une excellente résistance mécanique et une surface spécifique élevée. Ce perborate de sodium monohydraté, quatrième objet de la présente invention, est en effet généralement deux fois plus résistant au moins que les perborates de sodium monohydratés connus et a une surface spécifique, mesurée par la méthode B.E.T., généralement comprise entre environ 7 et 10 m²/g.

Au contraire donc de ce qui était attendu de la technique connue, le perborate de sodium tétrahydraté de l'invention présente des caractéristiques physiques particulièrement bonnes qui sont heureusement transmises au perborate de sodium monohydraté qui en dérive et qui est adapté aux exigences de plus en plus sévères formulées par les utilisateurs.

Les exemples suivants, donnés à titre indicatif mais non limitatif, illustrent l'invention ou sont présentés pour comparaison.

### Exemple 1 :

On opère selon le schéma de procédé et d'équipement de la figure 7.

Le réacteur cylindroconique 1 a une hauteur totale égale à 3,5 mètres ; sa partie cylindrique a une hauteur égale à 2,5 mètres et un diamètre égal à 1 mètre ; il est principalement équipé de l'agitateur 2, d'injecteurs d'introduction des solutions aqueuses de peroxyde d'hydrogène H₂O₂ et de métaborate de sodium NaBO₂, de moyens d'échange et de contrôle thermique.

On introduit dans 1, dans une solution aqueuse sursaturée de perborate de sodium, par 3, 101 kg./h. d'une solution aqueuse de H₂O₂ à 70 % en poids de H₂O₂, par 4, 500 kg./h/ d'une solution aqueuse de NaBO₂ à 31,3 % en poids de NaBO₂, par 5, un agent tensio-actif anionique qui est l'un de ceux relevant du certificat d'addition français n°2228718 au brevet français n°2121428, en l'occurence un agent tensio-actif anionique à base d'ester de l'acide oléique sulfaté ajouté de façon à être présent dans ladite solution sursaturée à raison de 6 g. par kilogramme d'agglomérats de perborate de sodium tetrahydraté fabriqués, évacués de 1 par 10 et comptés à l'état sec.

La température dans 1 est maintenue pratiquement égale à 20-21°C.

Dans le même temps on soutire de 1, par 6, au terme de son mouvement ascensionnel dans 1 à une vitesse linéaire ascensionnelle égale à 13 mètres/h. dans la partie cylindrique de 1, 10 m³/h. de liquide à l'état désursaturé contenant, par litre, 30-35 g. de matière solide. La majeure partie de ce liquide est séparée de ladite matière solide dans le décanteur-séparateur 7 et recyclée dans 1, par 8.

La matière solide, avec du liquide désursaturé en quantité suffisante pour aider à son transfert, est recyclée dans le réacteur 1, par 9, dans la solution aqueuse sursaturée de perborate de sodium, tandis que sort de 1, par 10, un courant de debit volumique oscillant entre 0,9 et 1 m³/h. et contenant les agglomérats de perborate de sodium tétrahydraté fabriqués. Ceux-ci, de façon classique, sont séparés du liquide qui les accompagne, essorés et séchés.

Ce sont des agglomérats compacts et quasi-sphériques constitués de particules de perborate de sodium tétrahydraté de dimension maximale inférieure à 30»m, pratiquement même inférieure à 15»m.

La solidité mécanique de ces agglomérats est mesurée ainsi : 50 g. d'agglomérats sont soumis durant 6 minutes à l'action de 8 billes d'acier inoxydable de 20 mm de diamètre dans un cylindre horizontal en acier inoxydable de 100 mm de diamètre intérieur et de 115 mm de longueur qui tourne à une vitesse de 150 tours/minute. Le taux d'usure mécanique est alors évalué comme étant la quantité de perborate de sodium tétrahydraté de granulométrie inférieure à 53»m, exprimée en % pondéral, provoquée par la mesure.

Dans le cas des agglomérats obtenus selon le présent exemple, le taux d'usure mécanique est égal à 3 %.

Ces agglomérats ont une densité apparente égale à 790 g./l.

Leur granulométrie moyenne est égale à 310»m et leur répartition granulométrique est la suivante :

| | | |
|---|---|---|
| Refus cumulés: | 800»m | 0,44 % |
| | 400»m | 14,30 % |
| | 250»m | 79,50 % |
| | 150»m | 99,20 % |
| | 50»m | 100 % |

### Exemple 2 :

On répète l'exemple 1 en modifiant l'hydrodynamique du système par changement de type d'agitateur 2.

Le liquide désursaturé soutiré par 6 contient dans ce cas, par litre, 150 g. de matière solide en moyenne.

Les agglomérats de perborate de sodium tétrahydraté finalement obtenus sont encore conformes au but de l'invention. En particulier, ils sont constitués de particules de perborate de sodium tétrahydraté de dimension maximale nettement inférieure à 30»m.

Leur taux d'usure mécanique, évalué comme dans l'exemple 1, est égal à 8 % et leur densité apparente est égale à 780 g./l.

Leur granulométrie moyenne est égale à 320»m et leur répartition granulométrique est la suivante :

| | | |
|---|---|---|
| Refus cumulés: | 800»m | 0 % |
| | 400»m | 10,1 % |
| | 250»m | 82 % |
| | 150»m | 93,4 % |
| | 50»m | 99,5 % |

### Exemple 3 :

On procède selon le principe opératoire des exemples précédents mais la quantité horaire de solution aqueuse de H₂O₂ à 70 % en poids de H₂O₂ injectée dans 1 dans la solution aqueuse sursaturée de perborate de sodium est égale à 95 kg., celle de solution aqueuse de NaBO₂ à 31,3 % en poids de NaBO₂ égale à 431 kg., l'agent tensio-actif anionique, le même que dans les deux premiers exemples, est engagé dans la solution sursaturée de perborate de sodium à raison de 0,45 g. pour 100 g. d'agglomérats de perborate de sodium tétrahydraté fabriqués et comptés à l'état sec, le débit de liquide désursaturé évacué de 1 par 6 est égal à 10 m³/h. et la quantité de matière solide contenue par litre dudit liquide est égale à 70-90 g., sous forme de grains de granulométrie moyenne de l'ordre de 80»m, le séparateur-décanteur 7 des exemples 1 et 2 est remplacé par un hydrocyclone. Le liquide chargé de la matière solide ci-dessus retourne par 9 dans 1, dans la solution aqueuse sursaturée de perborate de sodium, à un débit égal à 2 m³/h. Le liquide clair qui contient environ 5-10 g./l de matière solide, est recyclé au bas de 1, par 8, à un débit égal à 8 m³/h. La température dans 1 est une fois encore réglée à 20-21°C.

Les agglomérats de perborate de sodium tétrahydraté fabriqués sont évacués par 10 dans un courant de débit volumique égal à 0,8 m³/h.

Ils sont conformes au but visé par l'invention en ce qu'ils sont, comme dans les exemples précédents, compacts et quasi- sphériques, et constitués de particules de perborate de sodium tétrahydraté de dimension maximale inférieure à 30»m.

Leur taux d'usure mécanique est égal à 3,5 % et leur densité apparente égale à 840 g./l.

Leur granulométrie moyenne est égale à 315»m et leur répartition granulométrique est la suivante :

| | | |
|---|---|---|
| Refus cumulés: | 800»m | 0 % |
| | 400»m | 7 % |
| | 250»m | 93 % |
| | 150»m | 99,7 % |
| | 50»m | 100 % |

### Exemple 4 (comparatif)

Dans cet exemple le perborate de sodium assurant l'état de sursaturation de la solution aqueuse sursaturée de perborate de sodium est obtenu en injectant, par 3, 98 kg./h de solution de H₂O₂ à 70 % de H₂O₂ en poids et, par 4, 445 kg. de solution aqueuse de NaBO₂ à 31,3 % de NaBO₂ en poids, c'est-à-dire en engageant H₂O₂ et NaBO₂ dans les mêmes proportions que dans l'exemple 3. La température dans 1 est aussi maintenue égale à 20-21°C.

Le présent exemple se différencie de l'exemple 3 en ce que la quantité d'agent tensio-actif anionique, exprimée comme dans l'exemple 3, est égale à 0,3 g., en ce que le liquide désursaturé qui sort de 6 à raison de 10 m³/h. contient 10-20 g. de matière solide par litre et est directement recyclé au bas de 1, son passage dans l'équipement séparateur 7 et le recyclage dans 1 par 9 étant supprimés.

Les agglomérats de perborate de sodium tétrahydraté fabriqués et isolés à partir du courant 10 ne répondent pas au but de l'invention en ce qu'ils ont un aspect désorganisé et surtout en ce qu'ils sont constitués de particules dont la grande majorité sont de dimension très largement supérieure à 30»m.

Le taux d'usure mécanique de tels agglomérats, évalué comme dans le cas des exemples précédents, est égal à 7 % et donc deux fois plus élevé que celui des agglomérats résultant de l'exemple 3.

Par rapport à ces derniers agglomérats, leur granulométrie moyenne est analogue et égale à 320»m mais le refus à 400»m est trois fois supérieur et égal à 20 %.

Les figures 1, 2, 3 se rapportent au perborate de sodium tétrahydraté conforme à la présente invention comme celui résultant des exemples 1, 2 ou 3.

Les figures 4, 5, 6 se rapportent au perborate de sodium tétrahydraté non conforme à la présente invention, tel qu'il résulte de l'exemple 4.

### Exemple 5 :

Pour fabriquer le perborate de sodium monohydraté à partir de perborate de sodium tétrahydraté, l'appareillage utilisé est constitué d'un réacteur de fluidisation, essentiellement ici un tube cylindrique en acier inoxydable de 90 mm de diamètre, muni à sa base d'une amenée d'air et dans sa partie supérieure d'une introduction de perborate de sodium à deshydrater et d'une évacuation de l'air de deshydratation au-dessus de la masse fluidisée, d'une évacuation du perborate de sodium deshydraté par débordement extérieur de la masse fluidisée, et enfin d'un système, généralement un ou plusieurs cyclones, permettant d'isoler efficacement les grains entraînés hors de la zone de fluidisation par l'air de deshydratation.

Dans le réacteur de fluidisation ci-dessus, on introduit 0,5 kg/h. de perborate de sodium tétrahydraté sous forme d'agglomérats conformes à la présente invention.

La température de l'air entrant dans la zone de fluidisation est égale à 150°C.

La vitesse ascensionnelle du flux gazeux est égale à 0,25 m./s.

Dans la zone de fluidisation la température est égale à 70°C et l'humidité relative égale à 16 %.

Le perborate de sodium fabriqué, recueilli à la sortie du réacteur a une teneur en oxygène actif égale à 15,3 % en poids et une excellente résistance mécanique illustrée par un taux d'usure mécanique égal à 2 % défini ici comme la diminution du refus à 150»m, exprimée en %, provoquée par fluidisation énergique gaz-solide du perborate en couche de faible épaisseur.

La surface spécifique du perborate de sodium monohydraté fabriqué selon le présent exemple est égale à 9 m²/g., mesurée par la méthode B.E.T.

### Exemple 6 (comparatif)

Il se différencie de l'exemple 5 uniquement en ce que le perborate de sodium tétrahydraté soumis à deshydratation est non conforme à la présente invention et est constitué d'agglomérats résultant de l'exemple 4.

Le taux d'usure mécanique du perborate de sodium monohydraté alors obtenu, mesuré de façon identique, ici et dans l'exemple 5, est égal à 8, quatre fois supérieur par conséquent au taux d'usure du perborate de sodium monohydraté obtenu dans l'exemple 5 à partir de perborate de sodium tétrahydraté conforme à l'invention.

## Revendications

1. Perborate de sodium tétrahydraté constitué d'agglomérats distincts, compacts et quasi-sphériques de particules unitaires de perborate de sodium tétrahydraté et susceptible d'être obtenu selon l'une des revendications 5 à 11, caractérisé en ce que lesdites particules sont de dimension maximale n'excédant pas 30»m.

2. Perborate selon la revendication 1, caractérisé en ce que la répartition granulométrique des agglomérats est telle que 85 % à 90 % d'entre eux sont de dimensions comprises entre 200»m et 400»m, au moins 95 % d'entre eux sont de dimensions supérieures à 150»m, et en ce que la quantité pondérale de fines de dimensions inférieures à 50»m présente avec lesdits agglomérats est inférieure à 2 % de leur poids.

3. Perborate selon l'une des revendications 1 à 2, caractérisé en ce que sa densité apparente est au moins égale à 500 g/l.

4. Perborate selon la revendication 3, caractérisé en ce que la densité apparente est comprise entre 700 et 850 g/l.

5. Procédé de fabrication du perborate de sodium tétrahydraté dans lequel :
les agglomérats de perborate de sodium tétrahydraté se constituent à partir de particules dudit perborate issues d'une solution aqueuse sursaturée de perborate de sodium dont l'état de sursaturation est assuré par l'apport en elle de perborate de sodium en solution aqueuse formé à partir de peroxyde d'hydrogène et de métaborate de sodium, et qui va se désursaturant tandis qu'elle se déplace selon un mouvement ascendant continu à une vitesse ascensionnelle telle que soit assuré un classement granulométrique des particules et agglomérats de la suspension solide-liquide qui se trouve ainsi formée,
l'état de sursaturation de la solution aqueuse sursaturée de perborate de sodium est assuré en présence d'un agent tensio-actif anionique,
les agglomérats fabriqués sont retirés de ladite suspension en début de déplacement ascendant du liquide,
le liquide à l'état désursaturé est retiré de ladite suspension au terme dudit déplacement ascendant,
caractérisé en ce que, à la fois :
. la formation du perborate de sodium nécessaire pour assurer ledit état de sursaturation est réalisée avec un rapport molaire métaborate de sodium/peroxyde d'hydrogène supérieur à 1,
. le liquide désursaturé retiré de la suspension solide-liquide au terme de son déplacement ascensionnel contient, par litre, au moins 30 g de matière solide à l'état de perborate de sodium tétrahydraté de granulométrie moyenne inférieure à la granulométrie moyenne des agglomérats fabriqués qui sont retirés de ladite suspension, la majeure partie de ce liquide désursaturé sortant du réacteur est séparée de la matière solide et recyclée au fond du réacteur,
. ladite matière solide avec du liquide désursaturé, en quantité suffisante pour aider à son transfert, est recyclée au réacteur en un point supérieur par rapport à l'amenée dans le réacteur de la solution aqueuse de peroxyde d'hydrogène.

6. Procédé selon la revendication 5, caractérisé en ce que l'agent tensio-actif anionique contient au moins une fonction sulfate et/ou sulfonate rattachée à un radical hydrocarboné ayant de 2 à 22 atomes de carbone, ou à un ou plusieurs cycles.

7. Procédé selon la revendication 6, caractérisé en ce que l'agent tensio-actif est présent à raison d'une quantité comprise entre 0,3 g et 0,6 g rapportée à 100 g d'agglomérats de perborate de sodium tétrahydraté fabriqués, comptés à l'état sec.

8. Procédé selon l'une des revendications 6 et 7, caractérisé en ce qu'un additif choisi parmi l'acide oléique sulfaté ou l'oléate d'isobutyle est présent avec le tensio-actif anionique.

9. Procédé selon la revendication 5, caractérisé en ce que l'agent tensio-actif anionique est un polymère polycarboxylique hydrosoluble ou soluble en milieu alcalin.

10. Procédé selon l'une des revendications 5 à 9, caractérisé en ce que le rapport molaire métaborate de sodium/peroxyde d'hydrogène choisi pour former le perborate de sodium assurant l'état de sursaturation de la solution aqueuse sursaturée de perborate de sodium est compris entre 1,05 et 1,20.

11. Procédé selon l'une des revendications 5 à 10, caractérisé en ce que le liquide à l'état désursaturé qui est retiré de la suspension solide-liquide au terme de son déplacement ascendant contient, par litre, de 30 g à 150 g de matière solide sous forme de perborate de sodium tétrahydraté.

12. Procédé de fabrication de perborate de sodium monohydraté de résistance élevée à l'usure mécanique, par deshydratation de perborate de sodium tétrahydraté en lit fluidisé gaz-solide au moyen d'un courant d'air chaud ou par deshydratation dudit perborate sous pression réduite, caractérisé en ce que le perborate de sodium tétrahydraté soumis à déshydratation est celui d'une des revendications 1 à 4.

13. Procédé selon la revendication 12, caractérisé en ce que le perborate de sodium tétrahydraté d'une des revendications 1 à 4 est deshydraté en lit fluidisé gaz-solide, au moyen d'un courant d'air chaud de température comprise entre 100°C et 180°C lorsqu'il entre dans la zone de fluidisation dans laquelle la température est comprise entre le température de fusion du perborate de sodium tétrahydraté et 80°C et l'humidité relative inférieure à 40 %.

14. Procédé selon la revendication 13, caractérisé en ce que l'humidité relative dans la zone de fluidisation est égale ou supérieure à 10 %.

15. Perborate de sodium monohydraté fabriqué selon une des revendications 12 à 14, caractérisé en ce qu'il résiste à l'usure mécanique deux fois mieux et plus que les perborates de sodium monohydratés connus tout en ayant une surface spécifique élevée et comprise entre 7 et 10 m²/g.

## Claims

1. Sodium perborate tetrahydrate consisting of distinct, compact and virtually spherical agglomerates of unit particles of sodium perborate tetrahydrate, and capable of being obtained according to one of Claims 5 to 11, characterized in that the said particles have a maximum size not exceeding 30 »m.

2. Perborate according to Claim 1, characterized in that the particle size distribution of the agglomerates is such that 85 % to 90 % of them are of a size between 200 »m and 400 »m, at least 95 % of them are of a size larger than 150 »m and in that the weight quantity of fines of a size smaller than 50 »m which is present with the said agglomerates is less than 2 % of their weight.

3. Perborate according to either of Claims 1 and 2, characterized in that its apparent density is at least 500 g/l.

4. Perborate according to Claim 3, characterized in that the apparent density is between 700 and 850 g/l.

5. Process for the manufacture of sodium perborate tetrahydrate, in which:
the agglomerates of sodium perborate tetrahydrate are formed from particles of the said perborate which originate from a supersaturated aqueous solution of sodium perborate whose state of supersaturation is ensured by supplying to it sodium perborate in aqueous solution, made from hydrogen peroxide and sodium metaborate, and which becomes desupersaturated as it moves in a continuous upward movement at an upward velocity such that a particle size classification is ensured of the particles and agglomerates of the solid-liquid suspension which is thus formed,
the supersaturated state of the supersaturated aqueous solution of sodium perborate is ensured in the presence of an anionic surface-active agent,
the manufactured agglomerates are withdrawn from the said suspension at the beginning of the upward movement of the liquid,
the liquid, in desupersaturated state, is withdrawn from the said suspension at the end of the said upward movement,
characterized in that, simultaneously:
- the formation of sodium perborate which is needed to ensure the said supersaturation state is produced with a sodium metaborate/hydrogen peroxide molar ratio higher than 1,
- the desupersaturated liquid withdrawn from the solid-liquid suspension at the end of its upward movement contains at least 30 g of solid matter per litre in the form of sodium perborate tetrahydrate of mean particle size which is lower than the mean particle size of the agglomerates manufactured which are withdrawn from the said suspension, most of this desupersaturated liquid leaving the reactor is separated from the solid matter recycled into the bottom of the reactor,
- the said solid matter with desupersaturated liquid in sufficient quantity to assist its transfer is recycled to the reactor at a point which is higher in relation to the delivery of the aqueous solution of hydrogen peroxide into the reactor.

6. Process according to Claim 5, characterized in that the anionic surface-active agent contains at least one sulphate and/or sulphonate functional group attached to a hydrocarbon radical containing from 2 to 22 carbon atoms or to one or more rings.

7. Process according to Claim 6, characterized in that the surface-active agent is present in a quantity of between 0.3 g and 0.6 g, referred to 100 g of manufactured sodium perborate tetrahydrate agglomerates, counted in the dry state.

8. Process according to either of Claims 6 and 7, characterized in that an additive chosen from sulphated oleic acid or isobutyl oleate is present with the anionic surfactant.

9. Process according to Claim 5, characterized in that the anionic surface-active agent is a polycarboxylic polymer which is water-soluble or soluble in alkaline medium.

10. Process according to one of Claims 5 to 9, characterized in that the sodium metaborate/hydrogen peroxide molar ratio chosen for forming the sodium perborate ensuring the supersaturated state of the supersaturated aqueous solution of sodium perborate is between 1.05 and 1.20.

11. Process according to one of Claims 5 to 10, characterized in that the liquid in the desupersaturated state which is withdrawn from the solid-liquid suspension at the end of its upward movement contains from 30 g to 150 g, per litre, of solid matter in the form of sodium perborate tetrahydrate.

12. Process for the manufacture of sodium perborate monohydrate with high resistance to mechanical wear, by dehydrating sodium perborate tetrahydrate in a gas-solid fluidized bed by means of a hot air stream or by dehydrating the said perborate under reduced pressure, characterized in that the sodium perborate tetrahydrate subjected to dehydration is that of one of Claims 1 to 4.

13. Process according to Claim 12, characterized in that the sodium perborate tetrahydrate of one of Claims 1 to 4 is dehydrated in a gas-solid fluidized bed by means of a hot air stream at a temperature of between 100°C and 180°C when it enters the fluidization zone in which the temperature is between the melting temperature of sodium perborate tetrahydrate and 80°C and the relative humidity is lower than 40 %.

14. Process according to Claim 13, characterized in that the relative humidity in the fluidization zone is equal to or higher than 10 %.

15. Sodium perborate monohydrate manufactured according to one of Claims 12 to 14, characterized in that it withstands mechanical wear two times better and more than the known sodium perborate monohydrates, while having a specific surface which is high and between 7 and 10 m²/g.

## Patentansprüche

1. Natriumperborat-Tetrahydrat bestehend aus einzelnen, kompakten und annähernd kugelförmigen Agglomeraten aus einheitlichen Partikeln von Natriumperborat-Tetrahydrat, erhältlich gemäß einem der Ansprüche 5 bis 11, dadurch gekennzeichnet, daß die Partikel nicht größer sind als 30 »m.

2. Perborat nach Anspruch 1, dadurch gekennzeichnet, daß die Agglomerate eine Korngrößenverteilung besitzen, bei der 85 bis 90 % der Agglomerate eine Größe zwischen 200 und 400 »m, wenigstens 95 % davon eine Größe von mehr als 150 »m besitzen und daß der Gewichtsanteil an zusammen mit den Agglomeraten vorhandenen Feinstteilchen mit einer Größe von weniger als 50 »m geringer als 2 Gew.-%, bezogen auf das Agglomeratgewicht, beträgt.

3. Perborat nach Anspruch 1 oder 2, dadurch gekennzeichnet, daß dessen Schüttvolumen mindestens 500 g/l beträgt.

4. Perborat nach Anspruch 1 oder 2, dadurch gekennzeichnet, daß das Schüttvolumen zwischen 700 und 850 g/l beträgt.

5. Verfahren zur Herstellung von Natriumperborat-Tetrahydrat, wobei:
sich die Natriumperborat-Tetrahydrat-Agglomerate aus Partikeln des Perborats bilden, die aus einer wäßrigen übersättigten Natriumperboratlösung stammen, deren übersättigter Zustand durch Einbringen einer aus Wasserstoffperoxid und Natriummetaborat gebildeten wäßrigen Natriumperboratlösung sichergestellt wird und die, während sie beim kontinuierlichen Aufsteigen in einen nicht übersättigten Zustand übergeführt wird mit einer derartigen Geschwindigkeit aufsteigt, daß die granulometrische Klassierung der Partikel und Agglomerate in der so gebildeten Fest-Flüssig-Suspension gewährleistet wird,
der übersättigte Zustand der wäßrigen übersättigten Natriumperboratlösung in Gegenwart eines anionischen oberflächenaktiven Mittels sichergestellt wird,
die hergestellten Agglomerate der Suspension zu Beginn der Steigbewegung der Flüssigkeit entnommen werden,
die nicht übersättigte Flüssigkeit der Suspension am Ende der Steigbewegung entnommen wird,
dadurch gekennzeichnet, daß
die zur Sicherstellung des übersättigten Zustandes benötigte Bildung von Natriumperborat mit einem molaren Verhältnis von Natriummetaborat zu Wasserstoffperoxid von größer 1 durchgeführt wird,
die der Fest-Flüssig-Suspension am Ende ihrer Steigbewegung entnommene nicht übersättigte Flüssigkeit pro Liter wenigstens 30 g Feststoff als Natriumperborat-Tetrahydrat mit einer geringeren mittleren Korngrößenverteilung enthält als derjenigen der hergestellten Agglomerate,
die der Suspension entnommen sind, wobei der Großteil der den Reaktor verlassenden nicht übersättigten Flüssigkeit von Feststoffen befreit und dem Reaktorboden wieder zugeführt wird, und
die Feststoffe zusammen mit einer für deren Transfer ausreichenden Menge an nicht übersättigter Flüssigkeit dem Reaktor an einer Stelle wieder zugeführt wird, die über dem Reaktorzulauf für die wäßrige Wasserstoffperoxidlösung liegt.

6. Verfahren nach Anspruch 5, dadurch gekennzeichnet, daß das anionische oberflächenaktive Mittel wenigstens einen mit einem Kohlenwasserstoffrest mit 2 bis 20 Kohlenstoffatomen oder einem oder mehreren Ringen verknüpften Sulfat- und/oder Sulfonatrest enthält.

7. Verfahren nach Anspruch 6, dadurch gekennzeichnet, daß das oberflächenaktive Mittel in einer Menge zwischen 0,3 und 0,6 g, bezogen auf 100 g an Natriumperborat-Tetrahydrat-Agglomeraten als Trockensubstanz, vorhanden ist.

8. Verfahren nach einem der Ansprüche 6 und 7, dadurch gekennzeichnet, daß ein Zusatz, ausgewählt aus sulfatierter Ölsäure oder Isobutyloleat zusammen mit dem anionischen oberflächenaktiven Mittel vorhanden ist.

9. Verfahren nach Anspruch 5, dadurch gekennzeichnet, daß das anionische oberflächenaktive Mittel ein wasserlösliches oder in alkalischem Milieu lösliches polycarboxyliertes Polymer ist.

10. Verfahren nach einem der Ansprüche 5 bis 9, dadurch gekennzeichnet, daß das Molverhältnis von Natriummetaborat zu Wasserstoffperoxid, das zur Bildung des Natriumperborats gewählt wird, welches die Übersättigung der wäßrigen Natriumperboratlösung sicherstellt, zwischen 1,05 und 1,20 liegt.

11. Verfahren nach einem der Ansprüche 5 bis 10, dadurch gekennzeichnet, daß die übersättigte Flüssigkeit, die der Fest-Flüssig-Suspension am Ende ihrer Steigbewegung entnommen wird, pro Liter 30 bis 150 g an Feststoffen als Natriumperborat-Tetrahydrat enthält.

12. Verfahren zur Herstellung von Natriumperborat-Monohydrat mit erhöhter Widerstandsfähigkeit gegenüber mechanischer Abnutzung durch Dehydratation von Natriumperborat-Tetrahydrat in einen, Gas-Festkörper-Wirbelbett mittels eines heißen Luftstroms oder durch Dehydratation des Perborats bei reduziertem Druck, dadurch gekennzeichnet, daß die Dehydratation mit dem Natriumperborat-Tetrahydrat nach einen, der Ansprüche 1 bis 4 durchgeführt wird.

13. Verfahren nach Anspruch 12, dadurch gekennzeichnet, daß das Natriumperborat-Tetrahydrat nach einem der Ansprüche 1 bis 4 in einen, Gas-Festkörper-Wirbelbett mittels eines heißen Luftstroms mit einer Temperatur zwischen 100 und 180 °C dehydratisiert wird, wenn dieser in die Wirbelschichtzone eintritt, in der die Temperatur zwischen der Schmelztemperatur des Natriumperborat-Tetrahydrats und 80 °C und die relative Feuchtigkeit unterhalb von 40 % liegt.

14. Verfahren nach Anspruch 13, dadurch gekennzeichnet, daß die relative Feuchtigkeit in der Wirbelschichtzone 10 % oder mehr beträgt.

15. Natriumperborat-Monohydrat, hergestellt nach einem der Ansprüche 12 bis 14, dadurch gekennzeichnet, daß es eine mindestens doppelt so hohe Widerstandsfähigkeit gegenüber mechanischer Abnutzung im Vergleich zu bekannten Natriumperborat-Monohydraten besitzt und dabei eine höhere spezifische Oberfläche zwischen 7 und 10 m²/g aufweist.
